# EUROPEAN PATENT APPLICATION

(11) **EP 4 613 578 A1**
(43) Date of publication of application: **10.09.2025**
(21) Application number: 25162324.5
(22) Date of filing: 07.03.2025
(51) Int. Cl.: B60T 8/17, B60T 8/1755, B60T 8/24

(54) **METHOD FOR CONTROLLING A VEHICLE SYSTEM FOR IMPROVED STABILIZATION**

(30) Priority: 08.03.2024 IT 202400005266
(71) Applicant: CNH Industrial Italia S.p.A., 10156 Torino (IT)
(72) Inventor: Mariniello, Ciro, 10156 Turin (IT); Corrado, Vincenzo, 10156 Turin (IT); Molinari, Riccardo, 10156 Turin (IT)
(74) Representative: CNH Industrial IP Department

(57) **Abstract**

A method for controlling a vehicle system comprising a tractor (3), a trailer (5) coupled to the tractor, and brakes, comprises detecting: a rotation angle (α) and a towing force (TF) of the trailer; a steering angle (θ) of the tractor; a speed (V) of the vehicle system; and a brake health status of one or more of the brakes. The method further comprises: determining if the vehicle system is in un unstable condition based on rotation angle, towing force, steering angle and speed; if the vehicle system is in the unstable condition, determining a braking distribution among the brakes for reducing the instability, based on rotation angle, towing force, steering angle, speed, and brake health status. The vehicle system is braked according to the braking distribution.

## Description

### TECHNICAL FIELD

The present invention concerns a method for controlling a vehicle system for improved stabilization. In particular, the invention concerns the stabilization of a tractor-trailer combination.

The present invention finds its preferred, although not exclusive, application in vehicle systems for agricultural applications.

### BACKGROUND OF THE INVENTION

Vehicle systems are known that comprise a tractor and a trailer coupled to the tractor.

Typically, a tractor and a trailer are reciprocally connected, for example by a hitch, so that the trailer can pivot with respect to the tractor about horizontal and vertical axes, thereby causing the tractor-trailer combination to be articulated.

During driving, the interaction between the tractor and the trailer may lead to an instability condition of the vehicle system, depending on specific driving conditions, for example when the vehicle system drives downhill or during a braking event while the vehicle system is moving at a high speed.

In fact, it may happen that the trailer starts pushing the tractor or that a misalignment arises between the tractor and the trailer.

In detail, the vehicle system may become unstable when the rotation angle between the tractor and the trailer starts to increase in un uncontrolled way.

The instability of the tractor-trailer combination may be highly dangerous and pose serious safety hazard.

Therefore, the need is felt to improve the stability of a vehicle system comprising a tractor and a trailer coupled to the tractor.

An aim of the present invention is to satisfy the above-mentioned needs.

### SUMMARY OF THE INVENTION

The aforementioned aim is reached by a method for controlling a vehicle system comprising a tractor and a trailer, a method for controlling the vehicle system and a computer program, as claimed in the appended set of claims.

### BRIEF DESCRIPTION OF DRAWINGS

For a better understanding of the present invention, embodiments are described in the following, by way of nonlimiting examples, with reference to the attached drawings wherein:
- Figure 1 is a block diagram of a vehicle system according to an embodiment;
- Figure 2 is a schematic exemplificative view from above of the vehicle system of Figure 1;
- Figure 3 is a flowchart of a method for controlling a vehicle system comprising a tractor and a trailer, according to an embodiment;
- Figure 4 is a schematic view of a vehicle system, in use, during driving;
- Figure 5 is a schematic exemplificative view from above of a vehicle system, in use, during driving; and
- Figure 6 is a schematic exemplificative view from above of a vehicle system according to a different embodiment.

### DETAILED DESCRIPTION OF THE INVENTION

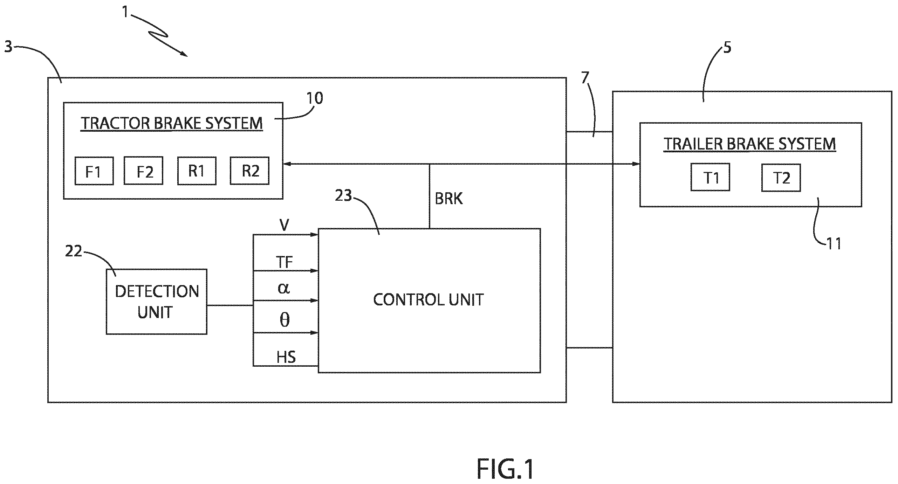

Figure 1 shows a schematic view of a vehicle system 1 comprising a tractor 3 and a trailer 5 coupled to the tractor 3. In practice, the tractor 3 and the trailer 5 form a tractor-trailer combination.

Preferably, the vehicle system 1 is for agricultural applications.

The trailer 5 may be a powered or unpowered towed vehicle.

In detail, the tractor 3 is coupled to the trailer 5 via connection means 7, for example a towing hitch, a drawbar or different coupling elements, for allowing towing of the trailer 5 by the tractor 3.

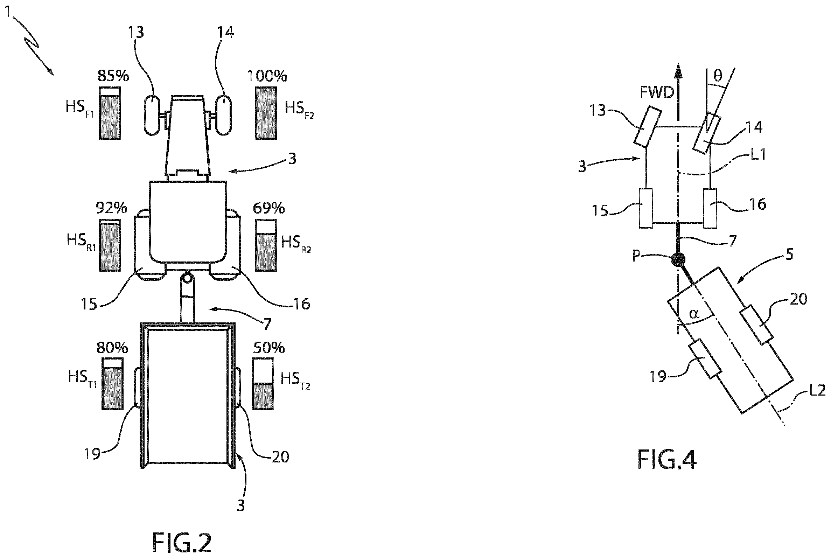

In the following description (as for example shown in figure 2), the tractor 3 and the trailer 5 are wheeled vehicles. However, the tractor 3 and/or the trailer 5 may have wheels and/or tracks.

The vehicle system 1 comprises a braking system for braking the vehicle system 1; in particular, in this embodiment, the braking system comprises both a tractor brake system 10 for braking the tractor 3 (for example the respective wheels or tracks) and a trailer brake system 11 for braking the trailer 5 (for example the respective wheels or tracks).

Each of the tractor brake system 10 and the trailer brake system 5 may comprise one or more brakes, for example one or more brakes for each wheel.

As schematically shown with reference to Figures 1 and 2, the tractor brake system 10 may comprise two front brakes F1, F2 and two rear brakes R1, R2.

The trailer brake system 11 may comprise two brakes T1, T2.

In detail, the tractor 3 may have two front wheels 13, 14 (one on the left side and one on the right side of the tractor 3) and two rear wheels 15, 16 (one on the left side and one on the right side of the tractor 3), and the trailer 5 may have two wheels 19, 20 (one on the left side and one on the right side of the trailer 5).

The front brakes F1, F2 control braking of the front wheels 13 and, respectively, 14 of the tractor 3.

The rear brakes R1, R2 control braking of the rear wheels 15 and, respectively, 16 of the tractor 3.

Brakes T1, T2 control braking of the wheels 19 and, respectively, 20 of the trailer 5.

The vehicle system 1 comprises electronic control resources for controlling functioning of the vehicle system 1, in particular comprising a detection unit 22 and a control unit 23, operatively coupled.

The detection unit 22 is configured to detect a plurality of quantities indicative of working conditions of the vehicle system 1 and, in response, provide data to the control unit 23 that are indicative of the detected quantities, as discussed hereinafter in detail.

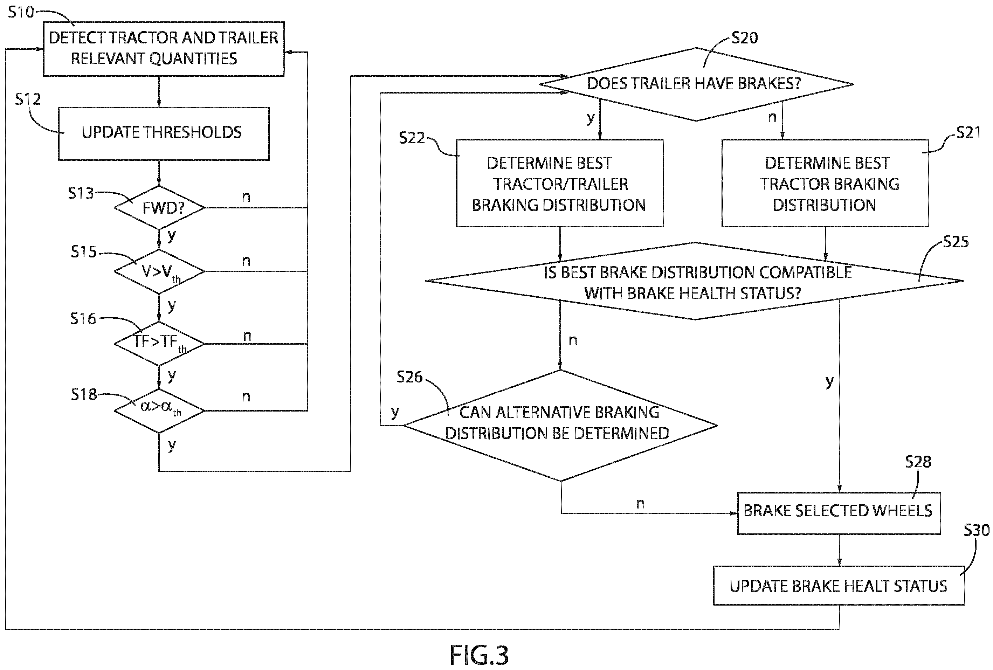

With reference to the flowchart of Figure 3, a method is described for controlling the stability of the vehicle system 1.

At a step S10, tractor and trailer relevant quantities are detected that are indicative of the functioning of the vehicle system 1, in particular of a current working condition of the vehicle system 1.

In detail, at step S10, the following steps are performed:
- detecting a rotation angle α of the trailer 5;
- detecting a towing force TF acting on the trailer 5;
- detecting a steering angle θ of the vehicle system 1 (in particular of the tractor 3);
- detecting a speed V of the vehicle system 1; and
- detecting a brake health status HS of the braking system of the vehicle system 1.

The rotation angle α is indicative of a misalignment between the tractor 3 and the trailer 5, for example a misalignment between a line passing longitudinally through the tractor 3 and a line passing longitudinally through the trailer 5.

In practice, the rotation angle α may be the rotation angle the trailer 5 and an axis of the vehicle system 1, in particular the rotation angle between tractor 3 and trailer 5.

In particular, with reference to the schematic view of figure 4, the rotation angle α may be the angle measured between lines L1 and L2, wherein line L1 is a line parallel to a longitudinal axis of the tractor 3 and line L2 is a line parallel to a longitudinal axis of the trailer 5.

The rotation angle α may be detected by acquiring, by the control unit 23, respective rotation data that are indicative of the rotation angle α between the tractor 3 and the trailer 5. For example, the rotation data may be generated by one or more dedicated sensors of the detection unit 22 configured to measure one or more quantities indicative of the rotation angle α.

The towing force TF is indicative of the force acting between tractor 3 and trailer 5 because of the towing.

In detail, the towing force TF may be a force acting on the connection means 7.

The towing force TF may be detected by acquiring, by the control unit 23, respective force data that are indicative of the towing force TF between the tractor 3 and the trailer 5. For example, the force data may be generated by one or more sensors of the detection unit 22 configured to measure one or more quantities indicative of the towing force TF, for example one or more force sensors coupled to the connection means 7.

The steering angle θ is indicative of the steering direction of the vehicle system 1, in particular of the tractor 3.

For example, the steering angle θ may be indicative of an angle of the wheels of the tractor 3 (e.g., wheels 13, 14 in the example of figure 4) with respect to a direction parallel to the longitudinal axis L1 of the tractor 3.

The steering angle θ may be detected by acquiring, by the control unit 23, respective steering data that are indicative of the steering angle θ of the tractor 3. For example, the steering data may be generated by one or more sensors of the detection unit 22 configured to measure one or more quantities indicative of the steering angle θ, for example one or more sensors coupled to the wheels 13, 14 and to other steering means (e.g., a steering wheel) of the tractor 3 here not shown.

The speed V is the driving speed of the vehicle system 1, for example a longitudinal speed of the vehicle system 1 along a driving direction.

The speed V may be detected by acquiring, by the control unit 23, respective speed data that are indicative of the speed V of the tractor 3. For example, the speed data may be generated by one or more dedicated sensors of the detection unit 22 configured to measure one or more quantities indicative of the speed V.

The break health status HS is indicative of the braking capacity of the braking system; in particular, in this embodiment the braking capacity of the tractor brake system 10 and the trailer brake system 11.

In practice, the brake health status HS may be indicative of the actual maximum braking force applicable by each brake F1, F2, R1, R2, T1, T2 of the vehicle system 1.

In detail, the brake health status HS may be indicative of the braking capacity of any one or more of the brakes F1, F2, R1, R2 of the tractor 3 and of any one or more of the brakes T1, T2 of the trailer 5.

In particular, in this embodiment, the brake health status HS is indicative of the braking capacity of each of the brakes F1, F2, R1, R2 of the tractor 3 and of each of the brakes T1, T2 of the trailer 5.

In other words, as shown in figure 2, the brake health status HS may be indicative of the health status HS_{F1} of the front brake F1, the health status HS_{F2} of the front brake F2, the health status HS_{R1} of the rear brake R1, the health status HS_{R2} of the rear brake F2, the health status HS_{T1} of trailer brake T1 and the health status HS_{T2} of trailer brake T2.

In the present description, without loss of generality and for sake of simplicity, acronym HS may be used indistinctly to indicate health statuses HS_{F1}, HS_{F2}, HS_{R1}, HS_{R2}, HS_{T1}, HS_{T2}.

The brake health status HS may be detected by acquiring, by the control unit 23, respective brake data that are indicative of the brake health status HS. For example, the brake data may be generated by one or more sensors of the detection unit 22 configured to measure one or more quantities indicative of the brake health status. For example, for each brake, detection of the respective brake health status may be based on any one or more of optical monitoring of the brake, pressure of a hydraulic circuit of the brake, temperature, etc.

According to an embodiment, at step S10, a driving direction, such as forward (FWD) or backward, of the vehicle system 1 may also be detected. The driving direction may be detected by acquiring, by the control unit 23, respective driving data that are indicative of the driving direction of the vehicle system 1. For example, the driving data may be generated by one or more sensors of the detection unit 22.

Then, the control unit 23 determines if the vehicle system 1 is in an unstable condition based on one or more of the detected relevant quantities.

In particular, the unstable condition is indicative of un unstable interaction between the tractor 3 and the trailer 5. For example, the vehicle system 1 may be in the unstable condition if the behavior the trailer 5 does not reflect an expected behavior.

In other words, the unstable condition is indicative of an unsafe condition of the vehicle system 1.

In particular, according to an embodiment, the unstable condition may be verified based on the actual moment of forces acting between the tractor 3 and the trailer 5. The actual moment of forces is a function of the data detected at step S10 and may be calculated based on said data. For example, the actual moment of forces may be determined with respect to a pivot point P between the tractor 3 and the trailer 5; the pivot point P may be, for example, the attachment point between tractor 3 and trailer 5, i.e. a point of the connection means 7.

According to the embodiment of figure 3, determination of an unstable condition of the vehicle system 1 is based on:
- (optionally) the driving direction of the vehicle system 1. In particular, the control unit 23 may check, step S13, if the vehicle system 1 is moving in the forward direction;
- the speed V of the vehicle system 1. In particular, the control unit 23 may check, step S15, if the speed V is higher than a threshold Vₜₕ;
- the towing force TF between tractor 3 and trailer 5. In particular, the control unit 23 may check, step S16, if the towing force TF is higher than a threshold TFₜₕ; and
- the rotation angle α between tractor 3 and trailer 5.
In particular, the control unit 23 may check, step S18, if the rotation angle α is higher than a threshold αₜₕ.

The thresholds Vₜₕ, TFₜₕ, αₜₕ, may be stored, for example, in a memory of the control unit 23.

If any of the checks of steps S13, S15, S16 and S18 is negative (branch N from the respective blocks), then the control unit 23 determines that the vehicle system 1 is not in an unstable (i.e., unsafe) condition. In this case, the method returns to step S10.

If all the checks of steps S13, S15, S16 and S18 are verified (branch Y from the respective blocks), then the control unit 23 determines that the vehicle system 1 is in the unstable condition.

The fact that the unstable condition may be determined based on the comparison of any one or more of the speed V, the rotation angle α and the towing force TF with the respective thresholds allows to obtain a fast and easy method for detecting if the current maneuver of the vehicle system 1 is safe or not.

Moreover, the further optional verification based on the driving direction (step S13) may further improve the accuracy in determining whether the vehicle system 1 is in an unstable condition.

The control unit 23 determines if the vehicle system 1 is in un unstable condition also based on the steering angle θ. Using the steering angle θ may improve the accuracy in determining if the vehicle system 1 is in an unstable condition.

In detail, according to an embodiment, the control unit 23, for determining if the vehicle system 1 is in an unstable condition, may update (step S12) any one or more of the thresholds Vₜₕ, TFₜₕ, αₜₕ, based on the steering angle θ. Using the steering angle may improve the accuracy in determining if the vehicle system 1 is in an unstable condition. In fact, if the vehicle system 1 is steering (i.e., the trajectory thereof is not straight) then a rotation angle α different from zero is expected between the tractor 3 and the trailer 5.

For example, the thresholds may be updated with respect to the current stored values.

In particular, the rotation angle threshold αₜₕ may be updated according to the steering angle θ. Thus, for example, if the steering angle θ is different from zero, the rotation angle threshold αₜₕ may be modified so that the rotation angle threshold αₜₕ is higher than in case the steering angle θ is zero. For example, the higher the steering angle θ, the higher the rotation angle threshold αₜₕ.

According to an embodiment, the control unit 23 may determine if the vehicle system 1 is in un unstable condition also based on the brake health status HS, in particular the brake health statuses HS_{F1}, HS_{F2}, HS_{R1}, HS_{R2}, HS_{T1}, HS_{T2} of all the brakes of the vehicle system 1. Using of the brake health status HS may increase the safety of the vehicle system 1.

In detail, according to an embodiment, the control unit 23, for determining if the vehicle system 1 is in an unstable condition, may update any one or more of the thresholds Vₜₕ, TFₜₕ, αₜₕ, based on the brake health status HS. For example, if the brake health status is low (e.g., if the brake health status HS of any of the brakes is low, for example lower than a threshold, and/or an overall health status of all the brakes, such as a mean value or other overall evaluation of the brake status, is low, for example lower than a threshold), then any one or more of the thresholds Vₜₕ, TFₜₕ, αₜₕ may be lowered, so that the unstable condition is detected in advance.

In response to the determination that the vehicle system 1 is in an unstable condition, the present method provides for determining a braking distribution, among the brakes of the braking system, that would reduce the instability of the vehicle system 1.

The braking distribution is determined based on the rotation angle α, steering angle θ, towing force TF and speed V detected at step S10. Moreover, as discussed in detail hereinafter, the braking distribution is determined also based on the health status HS of one or more of the brakes F1, F2, R1, R2, T1, T2 of the vehicle system 1.

The braking distribution is indicative of the amount of braking force to be applied by at least one the brakes (e.g., only one brake, each brake or only some of the brakes depending on the specific current condition of the vehicle system 1) of the vehicle system 1, so that the vehicle system 1 may return to a stable condition (e.g., so that the at least one of the verification steps S13, S15, S16, S18 does not indicate an unstable condition).

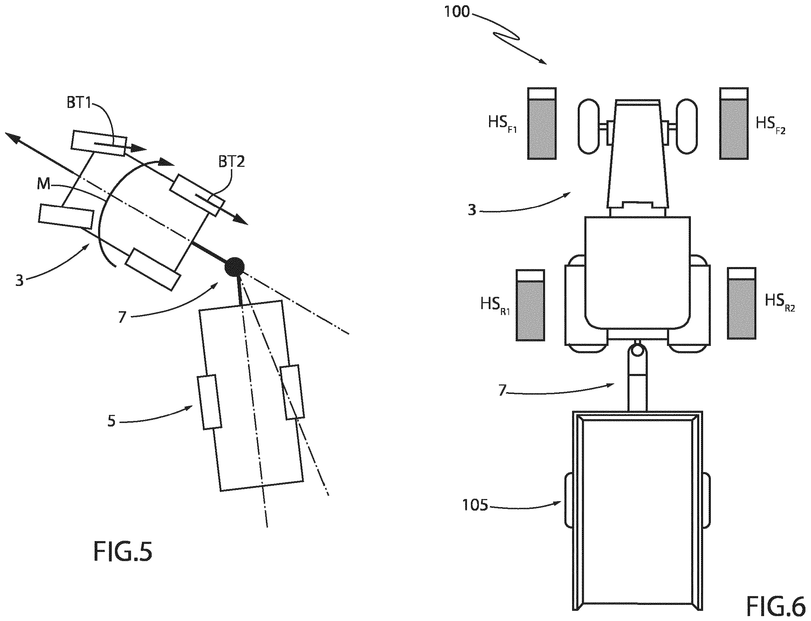

In particular, according to an embodiment, the braking distribution may be determined so that the corresponding braking action, as indicated for example in Figure 5 by arrows BT1, BT2, generates an alignment moment of forces (indicated as an example by an arrow M in figure 5) between tractor 3 and trailer 5 that has an opposite sign with respect to the actual moment of forces. The alignment moment of forces may be calculated for example with respect to the pivot point P of the vehicle system 1.

For example, in case tractor 3 and/or trailer 5 are wheeled vehicles, the alignment moment of forces may be calculated as a function of the braking action (torque) applied on each wheel and the radius of the wheels.

According to the embodiment of figure 3, the control unit 23, for determining the braking distribution, may first check (step S20) whether the trailer 5 has brakes.

If not, step S21, the braking distribution is determined only among the brakes of the tractor 3.

If the trailer 5 has brakes, step S22, then the control unit 23 may determine the braking distribution among both the brakes (here the brakes F1, F2, R1, R2) of the tractor 3 and the brakes (here the brakes T1, T2) of the trailer 5. However, even if the trailer 5 has brakes, the braking distribution may be determined only among the brakes F1, F2, R1, R2 of the tractor 3.

At step S21 or S22, the control unit 23 determines the best braking distribution.

According to an embodiment, the best braking distribution may be the braking distribution that minimizes the instability of the vehicle system 1. For example, the best braking distribution may be the braking distribution that allows to zero the instability of the vehicle system 1.

When determining the braking distribution, a plurality of braking distributions may be found having a similar or same stabilization effect on the vehicle system 1. For example, each of the braking distribution of the plurality of braking distributions may generate a similar (e.g., falling within a specific interval that may be chosen by a user) or same alignment moment of forces. In this case, the control unit 23 may determine, for each braking distribution, an expected wear of the brakes, that is how much the brakes would be worn out if braking according to the braking distribution is performed. The control unit 23 may thus select the one braking distribution based on the expected wear. This would allow not only to stabilize the vehicle system 1, but also to optimize wear of the brakes F1, F2, R1, R2, T1, T2.

For example, the control unit 23 may select the braking distribution that has the minimum expected wear for one or more of the brakes F1, F2, R1, R2, T1, T2. This would minimize wear of the brakes F1, F2, R1, R2, T1, T2. In alternative, the control unit 23 may select the braking distribution that generates would cause a uniform wear among the brakes F1, F2, R1, R2, T1, T2, for example so as to reduce the difference among the respective health statuses.

According to an embodiment, the best braking distribution may be the braking distribution that reduces the instability of the vehicle system 1 (i.e., that generates an alignment moment of forces having opposite sign with respect to the current moment of forces) and at the same time minimizes the wear of any one or more of the brakes F1, F2, R1, R2, T1, T2.

The braking distribution may be determined by running an algorithm, for example a known optimization algorithm, starting from the rotation angle α, steering angle θ, towing force TF and speed V detected at step S10.

At step S25, the control unit 23 verifies if the determined braking distribution is compatible with the brake health status HS.

In practice, the control unit 23 verifies if the braking forces to be applied as indicated by the determined braking distribution may actually be applied by the brakes F1, F2, R1, R2, T1, T2 in view of their respective current health status HS_{F1}, HS_{F2}, HS_{R1}, HS_{R2}, HS_{T1}, HS_{T2}.

For example, with reference to the example of figure 2, the brakes of the tractor 3 have the following health statuses: HS_{F1} 85%, HS_{F2} 100%, HS_{R1} 92%, HS_{R2} 69%; and the brakes of the trailer 5 have the following health statuses: HS_{T1} 80%, HS_{T2} 50%.

The following examples are considered for illustrative purpose only. If at step S22, the braking distribution provides for braking at 30% (i.e., at 30% of the maximum theoretical force applicable by the brake T2) on brake T2 of the trailer 5, then the braking distribution is compatible with the current brake health status of the braking system, since the brake T2 may apply a braking force up to 50% of the respective maximum theoretical braking force. If at step S22, the braking distribution provides for braking at 60% on brake T2 of the trailer 5, then the braking distribution is not compatible with the current brake health status of the braking system, since the maximum braking force of brake T2 is 50% according to the respective health status.

According to an embodiment, the control unit 23 may determine, based on the braking distribution, an expected brake wear of one or more of the brakes (F1, F2, R1, R2, T1, T2) of the braking system; may compare the expected brake wear with the brake health status; and may determine, based on the comparison, whether to modify the braking distribution.

The expected brake wear indicates how much the brakes of the vehicle system 1 would be worn out if the vehicle system 1 were braked according to the braking distribution, that is if the brake forces indicated by the braking distribution were applied to the respective brakes.

The braking distribution may not be compatible with the current brake health status if, for example, the expected brake wear for one or more of the brakes F1, F2, R1, R2, T1, T2 is higher than the respective current health status.

Following step S25, if the braking distribution is compatible with the brake health status HS, then (step S28) the vehicle system 1 is braked according to the determined braking distribution.

The control unit 23 may be configured to control the tractor brake system 10 and the trailer brake system 11, for example via one or more dedicated braking signals BRK, so that the tractor brakes F1, F2, R1, R2 and the trailer brakes T1, T2 apply the braking force indicated by the braking distribution.

On the contrary, if at step S25 it has been determined that the braking distribution is not compatible with the brake health status HS, then (step S26) the control unit 23 verifies if an alternative braking distribution may be found that reduces the instability of the vehicle system 1 and, at the same time, is compatible with the brake health status HS.

For example, the method may return to step S20 and at step S25 a new modified braking distribution may be determined.

In detail, according to an embodiment, the previously determined braking distribution may be modified so that the modified braking distribution reduces the instability of the vehicle system 1 and, at the same time, is compatible with the brake health status HS. Thus, the instability of the vehicle system 1 may be reduced more effectively.

Step S26 may be repeated for a number of times **N.** If after N iterations, the control unit 23 cannot find an alternative braking distribution that is compatible with the brake health status (that is: no braking distribution exists that reduces, in particular minimizes, the instability of the vehicle system 1 and at the same time is compatible with the brake health status of the brakes of the vehicle system 1), then the braking distribution is modified so that all the selected brakes are actuated at the respective maximum braking capacity. This can help trying to stabilize the vehicle system **1.**

For example, if the braking distribution would require to brake at 20% on brakes F1, R1 and T1, but the current health status HS of one or more of brakes F1, R1 and T1 is 10%, then the braking distribution is modified so that brakes F1, R1, T1 are braked at their maximum braking capacity.

After step S26, the vehicle system 1 is braked according to the braking distribution selected at step S26.

In response to the braking of step S28, the health status HS of some or all of the brakes F1, F2, R1, R2, T1, T2 is updated.

Finally, the method returns to step S10.

In other words, the final braking distribution to be applied for braking the vehicle system 1 is determined also based on the brake health status of the brakes F1, F2, R1, R2, T1, T2.

The advantages of the method of the invention emerge clearly from the above discussion.

In fact, the present method allows not only to detect an instability of the vehicle system 1 and to act on the brakes to counteract the instability, but the fact that the braking distribution is determined also based on the brake health status allows also to optimize the wear of the brakes of the vehicle system 1. For example, wear of the brakes may be minimized at each braking event. For example, wear of the brakes may be made more uniform.

It is clear that modifications can be made to the described method and system without departing from the scope of protection defined by the claims.

The method of the invention may be applied to a vehicle system 100, as shown in Figure 6, wherein the trailer 105 has no brakes. For illustrative purposes, the tractor 3 is the same as the tractor of the vehicle system 1, therefore is indicated by the same reference numeral. With reference to the flowchart of figure 3, at step S25 the braking distribution is determined by taking into account only brakes F1, F2, R1, R2 of the tractor 3.

For example, vehicle systems 1, 100 may comprise further elements, vehicles or implements other than what shown and described herein, depending on the specific application.

Trailers 5, 105 may be coupled directly or indirectly to the tractor, that is other vehicles, implements, etc. may or may not be coupled between tractor and trailer. For example, trailers 5, 105 may be formed by a plurality of trailer portions, mutually coupled with each other, for example each or some of them provided with respective brakes.

According to an embodiment, the trailer 5, 105 may be a first trailer and the vehicle system may further comprise a second trailer coupled to the tractor. In this case, the rotation angle (α) may be the rotation angle of the first trailer and/or of the second trailer, and the towing force may be the towing force acting on the first trailer and/or on the second trailer. For example, the rotation angle may be the rotation angle (misalignment) between the second trailer and the first trailer, the second trailer and the tractor, and/or the first trailer and the tractor.

In other words, trailers 5, 105 may be part of a plurality of trailers coupled to the tractor 3. In particular, the vehicle system 1, 100 may comprise more than one trailer (that is, a plurality of trailers coupled with one another), each or some of the trailers being provided with a respective number of brakes. In this case, the person skilled in the art would clearly understand that what has been discussed herein may be applied to a vehicle system having a plurality of trailers. For example, detection of the unstable condition and determination of the braking distribution may be based on the rotation angle and/or towing force of one or more trailers of the plurality of trailers. For example, the braking distribution may be determined among all or some of the brakes of the tractor and the plurality of trailers.

Tractor and/or trailer may have a different number of wheels and a different number of brakes. For example, only some of the wheels may be provided with brakes. For example, some or all wheels may each be provided with more than one brake.

For example, only the health status of some of the brakes F1, F2, R1, R2, T1, T2 may be taken into account for determining if the vehicle system is in the unstable condition and/or for determining the braking distribution.

For example, the instability condition of the vehicle system 1, 100 may be based on some (not all) of the quantities detected at step S10; i.e., on one or more of rotation angle, speed, steering angle, towing force, driving direction.

For example, the braking distribution may be determined based on some (not all) of rotation angle, speed, steering angle, towing force, brake health status.

For example, the braking distribution may be determined by selecting braking values for each brake from a database or look-up table, as a function of the mentioned detected quantities, that may be received by or stored in the control unit 23. For example, the database or look-up table may be determined during a calibration or initiation phase of the vehicle system, for example by a manufacturer or a final user of the vehicle system.

The control unit 23 and the detection unit 22 may generally indicate the electronic resources that are used for controlling the vehicle systems 1, 100. For example, such electronic control resources may form a control network comprising a plurality of elements, such as sensors, processing units, memories, controllers, etc.; centralized or distributed, implemented via hardware, software or of mixed type, depending on the specific application.

The embodiments shown and described above may be combined to provide further solutions.

## Claims

1. - A method for controlling a vehicle system (1; 100) comprising a tractor (3) and a trailer (5; 105) coupled to the tractor, wherein the vehicle system comprises a braking system (10, 11) having a plurality of brakes (F1, F2, R1, R2, T1, T2), the method comprising:
- detecting a rotation angle (α) of the trailer;
- detecting a towing force (TF) acting on the trailer;
- detecting a steering angle (θ) of the vehicle system;
- detecting a speed (V) of the vehicle system;
- detecting a brake health status (HS_{F1}, HS_{F2}, HS_{R1}, HS_{R2}, HS_{T1}, HS_{T2}) of one or more of the brakes of the braking system;
- determining (S12, S15, S16, S18) if the vehicle system is in un unstable condition based on the rotation angle, the towing force, the steering angle and the speed;
- if the vehicle system is in the unstable condition, determining (S20, S21, S22, S25, S26) a braking distribution, among the brakes of the braking system, that is configured to reduce the instability of the vehicle system, wherein the braking distribution is determined based on the rotation angle, the towing force, the steering angle, the speed, and the brake health status; and
- braking (S28) the vehicle system according to the braking distribution.

2. The method according to claim 1, wherein determining a braking distribution comprises:
- determining (S21, S22) a braking distribution based on the rotation angle, the towing force, the steering angle and the speed;
- verify if the braking distribution is compatible with the brake health status; and
- based on the verification, determining whether to modify the braking distribution.

3. The method according to the preceding claim, comprising modifying the braking distribution if the braking distribution is not compatible with the brake health status.

4. The method according to claim 2 or 3, wherein the braking distribution indicates braking with a number of selected brakes of the plurality of brakes, the method comprising, if the braking distribution is not compatible with the health status of the selected brakes, modifying the braking distribution so that the selected brakes are actuated at the respective maximum braking capacity.

5. The method according to the preceding claim, wherein the braking distribution is modified so that the selected brakes are actuated at the respective maximum braking capacity, if a braking distribution that is compatible with the brake health status does not exist.

6. The method according to any of the preceding claims, further comprising:
- determining, based on the braking distribution, an expected brake wear of one or more of the brakes of the braking system;
- comparing the expected brake wear with the brake health status; and
- based on the comparison, determining whether to modify the braking distribution to be used for braking the vehicle system.

7. The method according to any of the preceding claims, wherein determining a braking distribution comprises determining the braking distribution that reduces the instability of the vehicle system and minimizes the wear of one or more of the brakes of the braking system.

8. The method according to any of the preceding claims, wherein determining a braking distribution comprises determining the braking distribution that minimizes the instability of the vehicle system.

9. The method according to any of the preceding claims, wherein determining a braking distribution comprises:
- if a plurality of braking distributions has a same or similar stabilization effect on the vehicle system, determining, for each braking distribution, a respective expected brake wear of one or more of the brakes of the braking system; and
- selecting the braking distribution based on the expected brake wear of one or more of the brakes of the braking system.

10. The method according to the preceding claim, wherein selecting the braking distribution comprises selecting the braking distribution of the plurality of braking distributions that has the minimum expected wear of one or more of the brakes of the braking system.

11. The method according to any of the preceding claims, wherein determining if the vehicle system is in an unstable condition is further based on the brake health status of one or more of the brakes of the braking system.

12. The method according to any of the preceding claims, wherein determining if the vehicle system is in an unstable condition is based on any one or more of the following steps:
comparing the rotation angle with a first threshold (αₜₕ) ;
comparing the towing force with a second threshold (TFₜₕ) ;
comparing the speed with a third threshold (Vₜₕ).

13. The method according to the preceding claim, any one or more of the first threshold, the second threshold and the third threshold being a function of the steering angle (θ).

14. The method according to claim 12 or 13, any one or more of the first threshold, the second threshold and the third threshold being a function of the brake health status of any one or more of the brakes of the braking system.

15. The method according to any of the preceding claims, further comprising detecting a driving direction of the vehicle system, wherein determining if the vehicle system is in the unstable condition is further based on the driving direction.

16. The method according to any of the preceding claims, wherein determining if the vehicle system is in an unstable condition is based on a first moment of forces acting between the tractor and the trailer, the braking distribution being determined so that the corresponding braking action generates a second moment of forces between the tractor and the trailer having an opposite sign with respect to the first moment of forces.

17. The method according to any of the preceding claims, wherein the trailer is a first trailer, the vehicle system further comprising a second trailer coupled to the tractor, the rotation angle being the rotation angle of the first trailer and/or of the second trailer, the towing force being the towing force acting on the first trailer and/or on the second trailer.

18. A vehicle system (1; 100) comprising:
- a tractor (3);
- a trailer (5; 105) coupled to the tractor;
- a braking system (10, 11) comprising a plurality of brakes (F1, F2, R1, R2, T1, T2) for braking the tractor and/or the trailer; and
- electronic control resources (22, 23),
the electronic control resources being configured to:
- acquire rotation data indicative of a rotation angle (α) of the trailer;
- acquire force data indicative of a towing force (TF) acting on the trailer;
- acquire steering data indicative of a steering angle (θ) of the vehicle system;
- acquire speed data indicative of a speed (V) of the vehicle system;
- acquire brake data indicative of a brake health status (HS_{F1}, HS_{F2}, HS_{R1}, HS_{R2}, HS_{T1}, HS_{T2}) of one or more of the brakes of the braking system;
- determine if the vehicle system is in un unstable condition based on the rotation data, the force data, the steering data and the speed data;
- if the vehicle system is in the unstable condition, determine a braking distribution, among the brakes of the braking system, that is configured to reduce the instability of the vehicle system, wherein the braking distribution is determined based on the rotation data, the force data, the steering data, the speed data and the brake data; and
- brake the vehicle system according to the braking distribution.

19. The vehicle system according to the preceding claim, wherein the plurality of brakes comprises tractor brakes and/or trailer brakes.

20. A computer program comprising instructions that, when executed by electronic control resources (22, 23) coupled to a vehicle system that comprises a tractor (3); a trailer (5; 105) coupled to the tractor; and a braking system (10, 11) comprising a plurality of brakes, cause the electronic control resources to:
- acquire rotation data indicative of a rotation angle (α) of the trailer;
- acquire force data indicative of a towing force (TF) acting on the trailer;
- acquire steering data indicative of a steering angle (θ) of the vehicle system;
- acquire speed data indicative of a speed (V) of the vehicle system;
- acquire brake data indicative of a brake health status (HS_{F1}, HS_{F2}, HS_{R1}, HS_{R2}, HS_{T1}, HS_{T2}) of one or more of the brakes of the braking system;
- determine if the vehicle system is in un unstable condition based on the rotation data, the force data, the steering data and the speed data;
- if the vehicle system is in the unstable condition, determine a braking distribution, among the brakes of the braking system, that is configured to reduce the instability of the vehicle system, wherein the braking distribution is determined based on the rotation data, the force data, the steering data, the speed data and the brake data; and
- brake the vehicle system according to the braking distribution.
